# EUROPEAN PATENT SPECIFICATION

(11) **EP 0 740 379 B1**
(45) Date of publication and mention of the grant of the patent: **20.09.2000**
(21) Application number: 96660009.0
(22) Date of filing: 04.04.1996
(51) Int. Cl.: H02G 7/00, H01T 4/14

(54) **Arcing protection device for coated medium-voltage cables**
Lichtbogenschutzvorrichtung für ummantelter Mittelspannungskabel
Dispositif de protection contre arcs pour câbles en robés à moyenne tension

(30) Priority: 24.04.1995 FI 951930
(43) Date of publication of application: 30.10.1996
(73) Proprietor: Ensto Sekko Oy, 06100 Porvoo (FI)
(72) Inventor: Kokkonen, Markku, FIN-06100 Porvoo (FI); Teirikangas, Hannu, FIN-06100 Porvoo (FI)
(74) Representative: Ollikainen, Rauno Johannes

(56) References cited:
- EP-A- 0 387 865
- DE-C- 720 623
- FR-A- 2 667 195

## Description

The present invention relates to an arcing protection device for coated medium-voltage cables providing three phase advances with wires having insulation coating, said arcing protection device comprising a first plurality of arc conductors which are in a galvanic contact with the wires of the phase advances, such that each phase advance is provided with at least one arc conductor, the arc conductors included in the first plurality of arc conductors being attached to the wires by means of clamps which are provided with teeth piercing the insulation coating of the wires, the said wires extending past the post with their insulation coating intact with the exception of the piercing point of the said teeth.

It is prior known to protect equipment and a wire from overvoltage-induced electric arcs by using spark horns to produce an arc gap for discharging the overvoltage therethrough. As an electric arc burns between the spark horns, the piece of equipment or wire shall not be damaged. In this case, the question is not about a so-called high-power electric arc. The prior known spark horns, which are mounted on either side of a wire insulator, are structurally fragile and inconvenient in terms of installation and, thus, not useful with coated overhead cables. The Applicant's Patent publication EP-387865 discloses an arcing protection device according to above opening paragraph, adaptable to overhead cables, wherein the clamp of an arcing protection horn is provided with wire-insulator piercing teeth. When such an arcing protection device is used in connection with coated overhead cables, having a phase gap typically in the order of 0,5 m, the overvoltage shall discharge in a controlled fashion as an electric arc between the arcing protection horns of adjacent wires. However, coated cables or wires are also mounted on crossarms for open wires, resulting in a distance between the wires of over 700 mm. Notwithstanding the ionization of air between the wires, the distance is thus too long for enabling the discharge of an electric arc between the arcing protection devices of the wires. Hence, it is necessary to provide a controlled discharge path for the electric arc between wire and crossarm.

An object of the invention is to provide an arcing protection device which is suitable, regardless of a distance between wires, for coated medium-voltage cables such that controlled discharge conditions can be created and is structurally simple and easy to install.

This object is achieved by means of an arcing protection device of the invention on the basis of the characterizing features set forth in the appended claims 1 and 2.

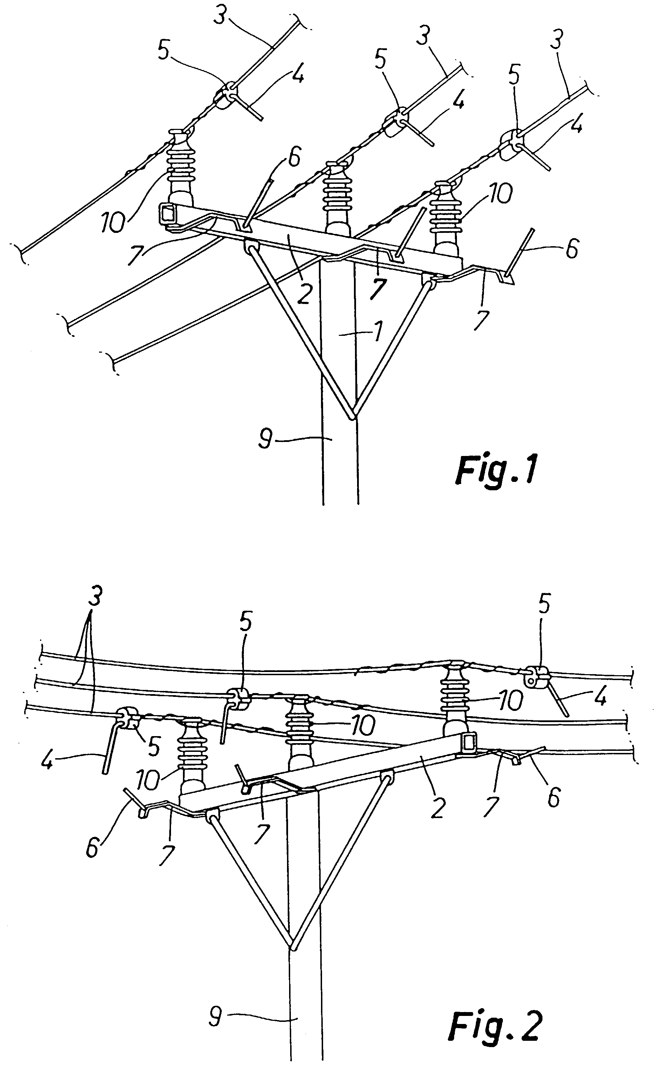

The invention will now be described in more detail by way of exemplary embodiments with reference made to the accompanying drawings, in which
- fig. 1: is a perspective view of an arcing protection device of the invention mounted on a medium-voltage cable;
- fig. 2: shows an embodiment slightly modified with respect to fig. 1, wherein the arc controllers of one wire are located on the opposite side of a crossarm from those of the other two wires;
- fig. 3: illustrates the adjustability of an arcing protection device to be mounted on a crossarm and
- fig. 4: is a perspective view of a clamp for attaching the arc conductors to a coated wire.

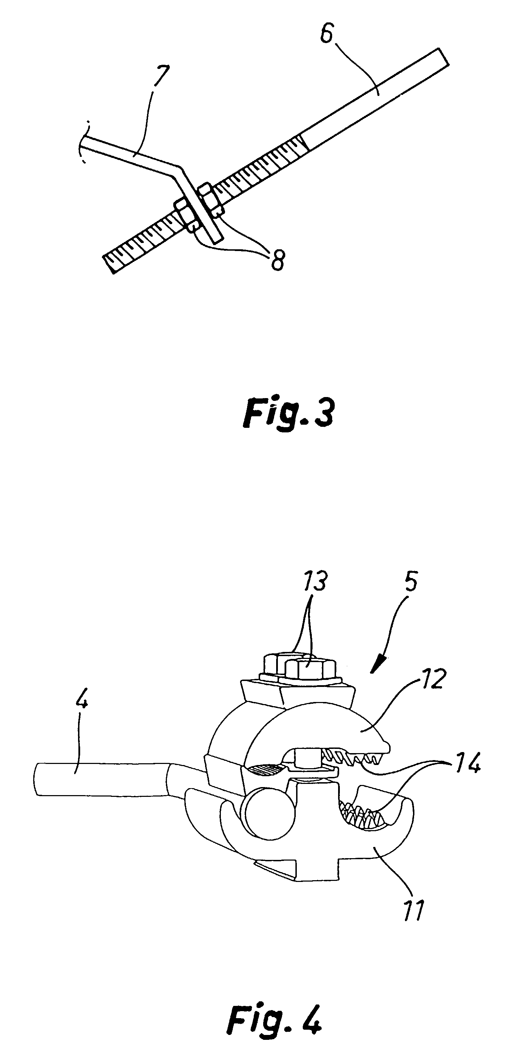

A crossarm 2 fastened to a post 1 carries insulators 10, which in turn support coated wires 3. The distance between wires may be more than 700 mm, if the crossarm 2 comprises an open-wire crossarm. At a small distance from the insulator 10, each of the three phase advances 3 is fitted with an arc conductor 4 extending at an angle of 30°-150° away from the wire 3. The arc conductor 4 is brought to a galvanic contact with the wire by using a clamp 5, shown in more detail in fig. 4. The clamp 5 has jaws 11, 12 which are provided with teeth 14, which pierce the wire insulator as screws 13 are tightened so as to squeeze the jaws 11, 12 around the wire 3. The arc conductor 4 attaches on the opposite side of the jaws 11, 12 as described in more detail in Patent publication EP-387865.

A second plurality of arc conductors 6 are attached to the post arm 2 or to the butts of the insulators 10 in such a position that an adjustable arc gap results between the arc conductors 4 and 6. The adjustment can be effected by providing the arc conductor 6 with a thread for locking it with nuts 8 at a desired length in the hole of a flat-iron bracket 7 (fig. 3). The flat-iron bracket 7 is bent to suitable angles for setting the opposite ends thereof at suitable angles on one hand for attachment to the post arm 2 and, on the other hand, for directing the arc conductor 6. In a typical preferred instance, the arc conductor 6 is directed obliquely upwards and the arc conductor 4 obliquely downwards. The flat-iron bracket 7 can be replaced with similar holder arms, which enable the directing and lengthwise adjustment of the arc conductor 6.

When using an arcing protection device of the invention, the wires 3 extend past the post with their insulation coating intact, with the exception of the piercing point of said teeth 14. The wire-insulator piercing clamp 5 can also be designed as a part of the constitution of the insulator 10 as described in the Applicant's Patent application FI-930743.

The arc conductors 4, 6 are in the shape of a rod, a bar or a horn and have a sufficient thickness and length to sustain powerful electric arcs. Unlike in thin spark horns, a recommended minimum diameter is 12 mm and typically the diameter is within the range of 10-16 mm.

## Claims

1. Arcing protection device for coated medium-voltage cables (3) providing three phase advances (3) with wires having insulation coating and with a distance between the wires (3) at least 700 mm, the said arcing protection device comprising a first plurality of arc conductors (4) which are in a galvanic contact with the wires of the phase advances (3), such that each phase advance (3) is provided with at least one arc conductor (4), the arc conductors (4) included in the first plurality of arc conductors being attached to the wires by means of clamps (5) which are provided with teeth (14) piercing the insulation coating of the wires (3), the said wires (3) extending past the post with their insulation coating intact with the exception of the piercing point of the said teeth (14), **characterized** in that the protection device includes a second plurality of individual arc conductors (6), which are attached to a post crossarm (2) or insulators (10), and which produce an arc gap with the first plurality of arc conductors (4) the arc conductors (6) included in the second plurality of arc conductors having an adjustable position for the adjustment of the arc gap.

2. Arcing protection device for coated medium-voltage cables (3) providing three phase advances (3) with wires having insulation coating and the said arcing protection device comprising a first plurality of arc conductors (4) which are in a galvanic contact with the wires of the phase advances (3), such that each phase advance (3) is provided with at least one arc conductor (4), the arc conductors (4) included in the first plurality of arc conductors being attached to the wires by means of clamps (5) which are provided with teeth (14) piercing the insulation coating of the wires (3), the said wires (3) extending past the post with their insulation coating intact with the exception of the piercing point of the said teeth (14), **characterized** in that the protection device includes a second plurality of individual arc conductors (6), which are attached to a post crossarm (2) or insulators (10) by way of a holder element (7) adapted to enable the directing and lengthwise adjustment of the said arc conductor (6).

3. Arcing protection device as set forth in claim 2, **characterized** in that the holder element (7) is a flat-iron bracket.

4. Arcing protection device as set forth in claim 1, **characterized** in that the arc conductors (6) included in the second plurality of arc conductors are attached to the crossarm (2) or the insulators (10) by way of a flat-iron bracket (7).

5. Arcing protection device as set forth in claim 3 or 4, **characterized** in that each flat-iron bracket (7) has a hole and each arc conductor (6) included in the second plurality of arc conductors is threaded and locked with nuts (8) in the hole.

6. Arcing protection device as set forth in any of claims 1-3, **characterized** in that the arc conductors (4, 6) of one wire (3) are located on the opposite side of the crossarm (2) from those (4, 6) of the other two wires (3).

7. The use of an arcing protection device as set forth in claim 1 or 2 on insulation-coated wires (3), having a relative distance of at least 700 mm.

## Patentansprüche

1. Lichtbogenschutzvorrichtung für ummantelte Mittelspannungskabel (3), die Dreiphasenvoreilungen (3) mit Drähten bereitstellt, die eine Isolierummantelung umfassen, und mit einem Abstand zwischen den Drähten (3) von mindestens 700 mm, wobei die Lichtbogenschutzvorrichtung eine erste Vielzahl von Lichtbogenleitern (4) umfaßt, die in einem galvanischen Kontakt mit den Drähten der Phasenvoreilungen (3) stehen, so daß jede Phasenvoreilung (3) mit mindestens einem Lichtbogenleiter (4) versehen ist, wobei die Lichtbogenleiter (4), die in der ersten Vielzahl von Lichtbogenleitern enthalten sind, an die Drähte mit Hilfe von Klemmen (5) befestigt sind, die mit Zähnen (14) versehen sind, die die Isolierummantelung der Drähte (3) durchbohren, wobei sich die Drähte (3) über den Masten hinaus erstrecken, wobei ihre Isolierummantelung unversehrt ist, mit Ausnahme des Durchbohrungspunktes der Zähne (14), dadurch gekennzeichnet, daß die Schutzvorrichtung eine zweite Vielzahl von individuellen Lichtbogenleitern (6) umfaßt, die mit einem Mastenquerträger (2) oder mit Isolatoren (10) verbunden sind, und die eine Lichtbogenunterbrechung mit der ersten Vielzahl von Lichtbogenleitern (4) bilden, wobei die Lichtbogenleiter (6), die in der zweiten Vielzahl von Lichtbogenleitern enthalten sind, eine verstellbare Lage zur Einstellung der Lichtbogenunterbrechung aufweisen.

2. Lichtbogenschutzvorrichtung für ummantelte Mittelspannungskabel (3), die Dreiphasenvoreilungen (3) mit Drähten bereitstellt, die eine Isolierummantelung umfassen, wobei die Lichtbogenschutzvorrichtung eine erste Vielzahl von Lichtbogenleitern (4) umfaßt, die in einem galvanischen Kontakt mit den Drähten der Phasenvoreilungen (3) stehen, so daß jede Phasenvoreilung (3) mit mindestens einem Lichtbogenleiter (4) versehen ist, wobei die Lichtbogenleiter (4), die in der ersten Vielzahl von Lichtbogenleitern enthalten sind, an die Drähte mit Hilfe von Klemmen (5) befestigt sind, die mit Zähnen (14) versehen sind, die die Isolierummantelung der Drähte (3) durchbohren, wobei sich die Drähte (3) über den Posten hinaus erstrecken, wobei ihre Isolierummantelung unversehrt ist, mit Ausnahme des Durchbohrungspunktes der Zähne (14), dadurch gekennzeichnet, daß die Schutzvorrichtung eine zweite Vielzahl von individuellen Lichtbogenleitern (6) umfaßt, die mit einem Mastenquerträger (2) oder mit Isolatoren (10) mit Hilfe eines Halterelementes (7) verbunden sind, das dazu angepaßt ist, die Ausrichtung und die Längsanpassung des Lichtbogenleiters (6) zu ermöglichen.

3. Lichtbogenschutzvorrichtung nach Anspruch 2, dadurch gekennzeichnet, daß das Halterelement (7) eine Flacheisenklammer ist.

4. Lichtbogenschutzvorrichtung nach Anspruch 1, dadurch gekennzeichnet, daß die Lichtbogenleiter (6), die in der zweiten Vielzahl von Lichtbogenleitern enthalten sind, an den Querträger (2) oder die Isolatoren (10) mit Hilfe einer Flacheisenklammer (7) befestigt sind.

5. Lichtbogenschutzvorrichtung nach Anspruch 3 oder 4, dadurch gekennzeichnet, daß jede Flacheisenklammer (7) ein Loch aufweist und jeder Lichtbogenleiter (6), der in der zweiten Vielzahl von Lichtbogenleitern enthalten ist, in das Loch geschraubt und mit Schraubenmuttern festgesetzt ist.

6. Lichtbogenschutzvorrichtung nach jedem der Ansprüche 1 - 3, dadurch gekennzeichnet, daß die Lichtbogenleiter (4, 6) eines Drahtes (3) sich an der von denjenigen (4, 6) der anderen zwei Drähte (3) gegenüberliegenden Seite des Querträgers (2) befinden.

7. Die Verwendung einer Lichtbogenschutzvorrichtung nach Anspruch 1 oder 2 über isolationsummantelte Drähte (3), die einen relativen Abstand von mindestens 700 mm aufweisen.

## Revendications

1. Dispositif de protection contre arcs pour câbles (3) enrobés à moyenne tension qui prévoit trois avances de phase (3) avec des fils ayant une gaine isolante et avec une distance entre les fils (3) d'au moins 700 mm, ledit dispositif de protection contre arcs comprenant une première pluralité de conducteurs d'arcs (4) qui sont en contact galvanique avec les fils des avances de phase (3), de sorte que chaque avance de phase (3) est pourvue d'au moins un conducteur d'arcs (4), les conducteurs d'arcs (4) inclus dans la première pluralité de conducteurs d'arcs étant fixés aux fils au moyen de brides (5) qui sont munies de dents (14) perçant la gaine isolante des fils (3), lesdits fils (3) s'étendant au-delà du poteau avec leur gaine isolante intacte à l'exception du point de perçage desdites dents (14), caractérisé en ce que le dispositif de protection comprend une deuxième pluralité de conducteurs d'arcs individuels (6), qui sont fixés à une traverse de poteau (2) ou isolateurs (10), et qui produisent un écart d'arcs avec la première pluralité de conducteurs d'arcs (4), les conducteurs d'arcs (6) inclus dans la deuxième pluralité de conducteurs d'arcs ayant une position réglable pour le réglage de l'écart d'arc.

2. Dispositif de protection contre arcs pour câbles (3) enrobés à moyenne tension qui prévoit trois avances de phase (3) avec des fils ayant une gaine isolante et ledit dispositif de protection contre arcs comprenant une première pluralité de conducteurs d'arcs (4) qui sont en contact galvanique avec les fils des avances de phase (3), de sorte que chaque avance de phase (3) est pourvue d'au moins un conducteur d'arcs (4), les conducteurs d'arcs (4) inclus dans la première pluralité de conducteurs d'arcs étant fixés aux fils au moyen de brides (5) qui sont munies de dents (14) perçant la gaine isolante des fils (3), lesdits fils (3) s'étendant au-delà du poteau avec leur gaine isolante intacte à l'exception du point de perçage desdites dents (14), caractérisé en ce que le dispositif de protection comprend une deuxième pluralité de conducteurs d'arcs individuels (6), qui sont fixés à une traverse de poteau (2) ou isolateurs (10) au moyen d'un élément de support (7) adapté pour permettre de diriger et de régler en longueur ledit conducteur d'arcs (6).

3. Dispositif de protection contre arcs tel qu'exposé à la revendication 2, caractérisé en ce que l'élément de support (7) est un support en fer plat.

4. Dispositif de protection contre arcs tel qu'exposé à la revendication 1, caractérisé en ce que les conducteurs d'arcs (6) inclus dans la deuxième pluralité de conducteurs d'arcs sont fixés à la traverse (2) ou aux isolateurs (10) au moyen d'un support en fer plat (7).

5. Dispositif de protection contre arcs tel qu'exposé à la revendication 3 ou 4, caractérisé en ce que chaque support en fer plat (7) a un trou et chaque conducteur d'arcs (6) inclus dans la deuxième pluralité de conducteurs d'arcs est fileté et bloqué avec des écrous (8) dans le trou.

6. Dispositif de protection contre arcs tel qu'exposé dans l'une quelconque des revendications 1-3, caractérisé en ce que les conducteurs d'arcs (4, 6) d'un fil (3) sont situés du côté opposé de la traverse (2) par rapport à ceux (4, 6) des deux autres fils (3).

7. Utilisation d'un dispositif de protection contre arcs tel qu'exposé dans la revendication 1 ou 2 sur des fils (3) à gaine isolante, ayant une distance relative d'au moins 700 mm.
